# EUROPEAN PATENT SPECIFICATION

(11) **EP 3 462 748 B1**
(45) Date of publication and mention of the grant of the patent: **23.02.2022**
(21) Application number: 18197622.6
(22) Date of filing: 28.09.2018
(51) Int. Cl.: H04N 21/431, H04N 21/6377, H04N 21/81

(54) **SYSTEM, METHOD AND DEVICES FOR THE MANAGEMENT OF GRAPHIC ELEMENTS**
SYSTEM, VERFAHREN UND VORRICHTUNGEN ZUR VERWALTUNG VON GRAFISCHEN ELEMENTEN
SYSTÈME, PROCÉDÉ ET DISPOSITIFS POUR LA GESTION D'ÉLÉMENTS GRAPHIQUES

(30) Priority: 28.09.2017 IT 201700108946
(43) Date of publication of application: 03.04.2019
(73) Proprietor: Sky Italia S.r.L., 20138 Milano (IT)
(72) Inventor: Gaglione, Ciro, 20138 Milano (IT)
(74) Representative: Hoffmann Eitle

(56) References cited:
- EP-A1- 3 160 156
- WO-A1-2014/145921
- WO-A1-2016/045729
- WO-A2-97/42757
- US-A1- 2003 030 652
- US-A1- 2010 251 304
- US-B1- 7 027 101

## Description

### TECHNICAL FIELD

The present invention relates to methods, devices, systems and computer programs for managing graphic elements.

### BACKGROUND OF THE INVENTION

Television operators normally transmit signals comprising primary content, such as programs, films, etc., from a television content distribution platform to a user device (client device or client), which can be a television set, a decoder (also called set top box or STB), a computer or a mobile device capable of receiving such signals. The primary content can comprise video content and audio content.

At present there exist applications that compose graphic content locally on the user device by downloading graphic assets via IP or SAT received from a server in the content distribution platform and with navigation logics implemented at the application level. This graphic content is used to augment the primary video content, i.e. it is added to the primary video content.

For example, there exist systems in which the primary content is augmented with information regarding what other users belonging to a network are watching at that moment. The augmented content can refer to a system enabling a social TV experience. In it the data on what users are watching are sent to a back-end (BE) system, aggregated and processed here in order to be sent subsequently in XML format via broadband and be displayed as an overlay on the video content through an application that is made available for a number of devices.

Conventionally, therefore, use is made of "fat" applications on the client side which are capable of retrieving data from a CDN or satellite channel (carousel) and displaying them on a screen according to the interaction logic implemented by the application code.

Alternatively, the prior art envisages the use of television graphics, whereby statistical data and additional information regarding a sports event, a show or a news report are used within graphic formats (templates) in order to generate graphic elements on a back-end system; these are merged with the original video component, and thus transmitted as a single aggregate video. What auxiliary contributions will be shown and when to do so is decided by the television director, who thus enriches the audiovisual content with supporting graphic elements. The user has no possibility of intervening, since they arrive as an integral part of the video stream, be it over a CDN or via satellite.

WO2016/045729A1 relates to a server (100) for providing a graphical user interface to a client over a communication network, the graphical user interface comprising a graphical user interface element, the graphical user interface element being formed by an element shape and an element text, the element shape being represented by element shape data, the element text being represented by element text data, the server (100) comprising an encoder (101) being configured to encode the element shape data into video data, a detector (103) being configured to detect a change associated with the graphical user interface element within the graphical user interface, and a communication interface (105) being configured to separately transmit the video data and the element text data over the communication network, the element text data being transmitted upon detection of the change associated with the graphical user interface element for providing the graphical user interface to the client. In this prior art, the graphical elements are encoded in the video.

US 2010/0251304A1 describes a network content delivery apparatus and methods based on content compiled from various sources and particularly selected for a given user. In one embodiment, the network comprises a cable television network, and the content sources include DVR, broadcast, nPVR, and VOD. The user-targeted content is assembled into a playlist, and displayed as a continuous stream on a virtual channel particular to that user. User interfaces accessible through the virtual channel present various functional options, including the selection or exploration of content having similarity or prescribed relationships to other content, and the ability to order purchasable content. An improved electronic program guide is also disclosed which allows a user to start over, record, view, receive information on, "catch up", and rate content. Apparatus for remote access and configuration of the playlist and virtual channel functions, as well as a business rules "engine" implementing operational or business goals, are also disclosed.

WO 97/42757 discloses the dynamic variation of overlay transparency of a graphical user interface based on the category of the program being displayed.

US 7,027,101B1 discloses a method for overlaying visual interface information atop a video signal without obscuring desired features of the video signal. The graphical user interface is displayed over the regions detected to be static.

The present invention is based, among other factors, on the recognition of various problems that reveal themselves in the use of the solutions available today.

### SUMMARY OF THE INVENTION

It has been recognised by the inventors that in the prior art interactive solutions for providing additional content do exist, but these solutions are very limited and suffer from many drawbacks, such as, for example, the use of many processing resources. Such solutions require, for example, a user device (client) with a considerable workload and ample use of satellite bandwidth where the application contains a variety of graphic assets.

The object of the present invention is thus to remedy the problems and drawbacks present in the prior art, such as those described above.

One object is to enrich/augment the audiovisual content on demand through STB client applications, allowing the TV viewer the possibility of supplementing the audiovisual content with additional television graphic elements, so as to use fewer resources compared to the prior art.

The invention is as defined by the appended clams. Examples are provided for facilitating the understanding of the invention.

More particularly, there is provided a method for managing graphic elements according to claim 1. There is also provided a user device (210) according to claim 11. There is further provided a server according to claim 12. There is further provided a system according to claim 13. There is further provided a computer program configured to operate according to claim 14 Finally, there is provided a medium for supporting a computer program according to claim 15.

### LIST OF FIGURES

Figure 1 is a flow diagram according to one embodiment of the present invention;
figure 2 is a block diagram of a system according to one embodiment of the present invention;
figure 3 is a block diagram of a server according to one embodiment of the present invention;
figure 4 is a block diagram of a user device according to one embodiment of the present invention;
figure 5 is a block diagram of a computer capable of implementing the present invention according to one embodiment of the present invention;
figure 6 is a diagram illustrating an example of a diagram of a solution according to one embodiment of the present invention;
figure 7a is a diagram illustrating an example according to one embodiment of the present invention;
figure 7b represents a detail of a graphic element displayed according to the example in figure 7a.

### DETAILED DESCRIPTION OF THE INVENTION

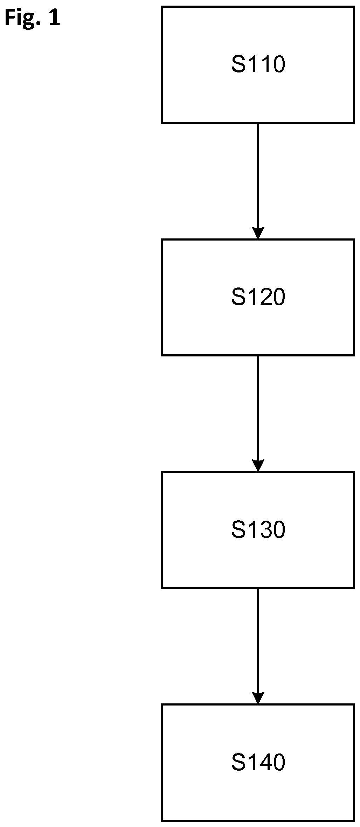

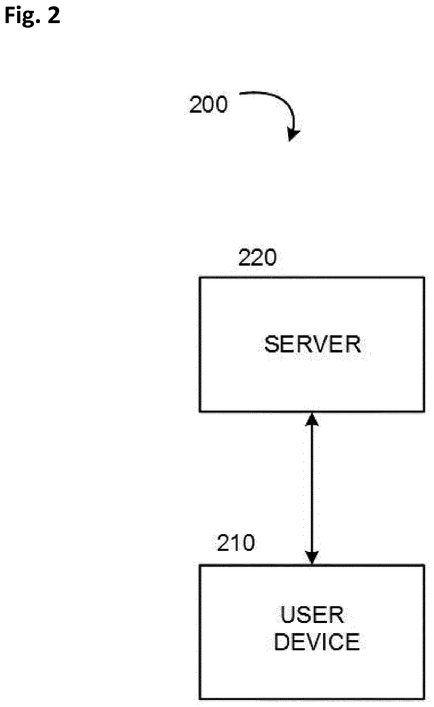

An example will now be described with reference to figure 1, which illustrates a flow diagram relating to a method for managing graphic elements, in particular graphic elements overlaid on video (or elements to be displayed). In this context, managing graphic elements can comprise generating and displaying the graphic elements, but the method can also be used to access, retrieve and/or navigate the graphic elements. Said method is implemented in a system (200) comprising a user device (210) and a server (220), as illustrated in figure 2. The system can also comprise a content delivery network (CDN). The system can implement broadcast or multicast communication, or it can be a streaming system, for example for VOD (video on demand) streaming or for streaming live content. The network can be a satellite network, or any cable and/or wireless network, for example the Internet.

The user device (210), or client, or front-end (FE) component, can be configured to display video content and run an application associated with the video content. The user device can comprise a television device, such as a set-top box (STB), a decoder and/or TV, or a display means or a display means with additional functions; for example, the TV can include an STB. The user device can also be a mobile phone, such as a smartphone, a tablet or a PC. Said devices receive primary content, or primary information, from devices configured to distribute the audiovisual content (an example of such a device is a headend or a server that distributes the content through any network).

The term server may refer to a remote back-end component or also to a plurality of servers. In general, the server can be a single device (accessible via IP, or also a headend of a cable or satellite television network) or an entity constructed from any combination of hardware and/or software, which may also be distributed (for example, various components connected via a network).

It is noted that the operation of the application can be described by means of a state machine having different levels of navigation. That is, one or more operating conditions of the user device are associated with a model of a state machine comprising a plurality of states and a plurality of transitions between said plurality of states. The state machine model may for example comprise a Petri net or a directed graph. The levels of navigation can be selected by the user or automatically by the user device.

Said application is designed to interact with a user of said user device (210) and cause a display of at least one graphic element overlaid on said video content. It is noted that in the invention the generation of the graphic element can preferably be entirely carried out remotely (remote rendering), in which case the user device performs only the display function.

In step S110 a request message relating to the application is sent from the user device (210) to the server (220). Said request message can comprise for example one or more among: a selection message of the user (for example a selection made by means of a remote control, or mouse, or by touching the screen, etc.) within the menu of the application; an automatic request to update/refresh the secondary content to be put on the screen; a request triggered by specific fields in the video signal, etc. The request message can be triggered by the user selecting a new channel, a new level of navigation or a graphic element. In another example, the message can be automatically triggered by the user device based on the video content that is displayed. For example, at a particular moment of a program.

In step S120, at least said one graphic element and positioning information for said at least one graphic element is generated by the server (220) based on the first request message. Generating means creating a graphic element, selecting it from among pre-existing graphic elements, modifying a pre-existing one, assembling it and/or receiving it from an outside network. Therefore, generating means rendering the graphic element on the server side, so that the terminal simply has to display it (without any particular rendering processes).

The graphic element can comprise information relating to the primary content (i.e. the primary video content, for example the audiovisual channel displayed when the application is launched), the level of navigation of the application, and indications about the content. The information is preferably adapted so as to be overlaid on the video content displayed by the user and is created based on the primary content. More specifically, it can be created based on the channel, what is being transmitted (on the channel at a certain moment, thus based on the program of a certain channel) and/or the navigation state. The information is contained in the request message. Said graphic element enables the audiovisual content to be enriched/augmented on demand via the client application, which is for example hosted on an STB (or in general on the user device), through additional television graphic elements.

The positioning information, or metadata, is information on where to position a graphic element on the screen. It can comprise information which enables the graphic element to be displayed on the user device, overlaid on the primary content. The positioning information is constructed/generated by the server based on the request message sent by the user. The request message can contain information regarding the primary content displayed by the user. That is, the positioning information can depend on the primary content, for example on the selected channel, on what is being transmitted (e.g. the audiovisual program being transmitted over the channel), or on the level of navigation of the application. It may also depend on the graphic element selected to be displayed. The positioning information depends on what part of the video it is intended to leave free, for example the most active part, i.e. which contains more movement. In one example, this can be achieved by means of image recognition techniques in order to identify the most suitable area for displaying the graphic content. In such a case, the positioning information ensures that the graphic element is displayed in the least active part of a video, so as not to cover the active part of the screen. It can ensure that the graphic element is displayed as transparent overlay on the video content, so that the video content is always visible under the graphic element. The degree of transparency can depend on the video content. What has been described is not limited, however, to the case of overlay in the sense of video layer on video layer, but can in fact be equally applied to the case in which the overlay entails narrowing the space for viewing the (main) audiovisual content and placing the at least one graphic element in the part of the screen freed by narrowing the main content (therefore, overlay refers both to the case in which one or more graphic elements are displayed on the screen, possibly as transparent overlay, or in proximity thereto when the main video content is reduced in size or divided into parts) . The network (CDN, Internet) has the task of transmitting them.

The server knows the schedule, or programme schedule, and therefore, once the channel and/or the level of navigation are known, it can create the graphic element. Information regarding the graphic element can be sent to the server by any device configured to broadcast content, for example by external or internal data providers (programme schedule providers). The server can process the information received and identify the information that is useful for generating the graphic element. In another case, the server can also directly obtain the graphic element from a data provider without the need for additional processing.

Unlike in the prior art, the server can be used to generate, for example to assemble, the graphic element, both on demand (i.e. at the user's request) and in a manner determined by the server independently of the user (for example on the basis of a programme schedule, etc.). In other words, the graphic element can be generated on the basis of the channel and/or the navigation state of the user and/or on the basis of a specific user request. The request can be made, for example, by selecting a graphic element already present on the user device or by selecting a button on the user device or on a device configured to manage the user device (e.g. a remote control, mouse, etc.).

The server can also align the graphic element with the video content by means of the positioning information.

In step S130, a response message containing said at least one graphic element and the positioning information is sent from the server (220) to the user device (210).

Then, in step S140, said at least one graphic element based on the positioning information is displayed in the user device (210). Displaying can comprise aligning the graphic element with the video content delivered by the user device and/or displaying it overlaid on the video content, etc. The graphic element is made available to the user, or TV viewer if the user device is a television device, by means of the application, or software component (single "thin" client application, since no particular processing such as graphic rendering is necessary) which enables access thereto and retrieval, navigation, and display (overlay) thereof together with the primary a/v content and interaction with the user.

The primary content can comprise any information which can be exploited by the user, and therefore text, audio and/or video services. The content can be delivered via the satellite channel or the CDN (in general any network). The graphic element will be overlaid on the video part of the primary content.

One of the advantages of the first embodiment consists in the fact that the elements supplementing the television graphics (graphic elements) are generated on the back end of the solution, i.e. on the server, and made available to the "thin" client application for use. Consequently, the workload of the user device is smaller than in the prior art, since the generation of graphic elements takes place on the server side. The graphic elements generated, moreover, are personalised, given that they are created based on the request message sent from the user device or, for example, based on the channel, what is being transmitted and/or the navigation state.

A further advantage of the invention lies in the fact that the graphic elements (assets) thus generated can be distributed over broadband to a plurality of users via the CDN, avoiding reliance on the use of satellite bandwidth. The satellite bandwidth used by the system is therefore reduced compared to the prior art. The decrease in the bandwidth used gives the possibility of creating graphic elements that are more complex than is the case in the conventional technique. In fact, in the conventional technique, saving bandwidth precludes using graphic elements on a mass scale.

Furthermore, the reliance on a single application, i.e. a "thin" client application, resolves the development and validation problems that occur in the case of the development of "fat" applications.

Finally, the production of graphic elements on the back end simplifies the logic of the single "thin" client application through which they are exploited, thus reducing the impact produced by the heterogeneity of the platforms and their capabilities.

The graphic element is part of a graphical interface which characterises the application at a certain instant of time. The graphical interface can be a part that interacts with the user. The user can therefore interact directly with the application, i.e. the user can navigate the graphic elements of the interface and access and request specific content. In this manner, it is possible to provide content that is relevant for the user. In one example, the application is characterised by a graphical interface with which to interact with the user, wherein the graphical interface preferably consists of the at least one or more graphic elements. In other words, the entire graphical interface is preferably generated entirely on the server side; the user device must simply display it on receiving it (once the one or more graphic elements are received).

In another optional variant of the first embodiment, the step of generating comprises generating the graphic element and the positioning information for the graphic element based on at least one between information relating to a channel and information relating to a level of navigation of the application. The information relating to a channel can be omitted, for example in the case of streaming or when the server knows the content currently being viewed. The channel is the (audiovisual) channel being transmitted at a given moment on the user device, whilst the level of navigation corresponds to a state of the state machine. Given that the server knows the schedule, or programme schedule, once the channel and level of navigation are known, it can create the graphic element. The graphic element will thus be related not only to the channel displayed by the user, but also to the level of navigation, as may be derived, for example, from the state machine associated with the application.

In a further optional variant, the step of generating comprises generating navigation information based on the request message. The navigation information is contained in the response message. The navigation information can comprise information related to the application, i.e. relating to different states of the state machine having different levels of navigation. It can comprise information relating to operating conditions of the user device which are associated with the state machine model. In other words, the navigation information can be information enabling navigation of the application by the user, for example by enabling the selection of a graphic element or the selection of an action by means of a button of a device which can manage the display on the user device, such as, for example, a remote control. That is, the user can change the level of navigation, select a graphic element and obtain further information, or further content.

Furthermore, the method optionally comprises the step of managing, in the user device (210), said at least one graphic element based on the navigation information. In one example, managing the graphic element can comprise displaying, navigating, enabling the display, accessing and retrieving the graphic element. That is, one or more graphic elements can be selected by the user (in other words, managing the at least one graphic element comprises making it selectable by the user based on the navigation information). The application can thus manage the graphic element. For example, the navigation information can comprise direction indicators (for example arrows) the user can select/click to navigate (the content associated with the graphic element). In one example, the user device can display further graphic elements sent by the server. In another example, the user device sends a second request message to the server containing information on the selected graphic element. The server generates one or more additional graphic elements and further positioning information based on the second request message and sends them to the user device to be displayed. In another example, by selecting one or more graphic elements, the user can change the channel or the level of navigation.

The positioning information comprises information on a position of the graphic element, or respective positions of the graphic elements on the user device. Furthermore, the position of said at least one graphic element can depend on the video content. For example, said position can refer to the position of the graphic elements on the screen of the TV, smartphone or tablet. The positioning information can refer to a position specified by coordinates indicating a point or an area of the screen, or else it can relate to preestablished positions, referred to, for example, as "top right", "top left", "middle", etc.

The positioning information is generated on the basis of a portion of an area of images of the video content.

The positioning information is generated on the basis of a portion of the video content, and in particular an area determined as less dynamic or less active( a portion in which a group of pixels varies less between a first and a second frame, where said frames follow one another or are sufficiently near). For example, the area can be automatically determined by an image analysis system, which analyses and establishes that there is an area which is more dynamic than others, and the graphic element is positioned outside that area. The area can be predefined according to the type of video, for example in the middle in the case of a video regarding sports, at the top in the case of a film and at the bottom in the case of news. In this manner it will be possible to fully exploit the space on the display screen, which is usually limited, especially on small screens. Furthermore, this will avoid causing user fatigue, since an incorrect positioning of the graphic overlay could make viewing the video difficult, thus causing user fatigue, or lead the user to activate and deactivate the application repeatedly, for example when in the video mode together with the application.

In yet another optional variant of the present embodiment, the positioning information comprises information on a degree of transparency relating to the display of said at least one graphic element. As discussed above, such information can cause the graphic element to be displayed in a transparent manner over the video content. In this manner, the video content can always remain visible beneath the graphic element. The degree of transparency can depend on the video content. For example, it can depend on the type of video content that is transmitted, i.e. a film, a sports programme or an entertainment programme. It can also depend on the video content itself, i.e. it can change from film to film or from programme to programme.

Optionally, and as mentioned above, the application run on the user device comprises a graphical interface which consists in the at least one graphic element, i.e. the graphical interface consists solely and entirely of graphic elements generated by the server. The user device will thus simply have to display them, without any rendering, as rendering is performed remotely by the server or another dedicated device.

Optionally, the user device displays the video content while the latter is being received (for example, on a satellite, terrestrial, cable, fibre optic broadcast channel, etc.; or via streaming, i.e. from a device designed to deliver audiovisual streaming services through a protocol suited to this purpose, such as HLS, MPEG-DASH, etc.), and displays the at least one graphic element once it has been received in its entirety (for example by means of an ftp connection, or http connection for transferring one or more graphic elements, or in general protocols that enable the transfer of a data unit as closed files, which can thus be used once downloaded in their entirety). In other words, the video content can also be displayed before all of the content has been downloaded, whereas the one or more graphic elements can be processed so as to be displayed only after they have been entirely received.

Optionally, the video content is transmitted to the user device (210) by a distribution device, and the at least one graphic element is transmitted to the user device by the server, wherein the distribution device (e.g. a headend, for example in the case of satellite, terrestrial, cable distribution etc.; in another example, a distribution device such as a streaming server) is preferably different from the server (for example an ftp and/or http server, etc). It is possible for the distribution device and the server to be the same device, or combined in the same device.

Optionally, the audiovisual content is transmitted to the user device through a first connection, and the at least one graphic element is transmitted to the user device through a second connection independent of the first connection. In other words, the second connection is a connection from and/or to the user device which is independently established and distinct from the first connection. The second connection is preferably different from the first connection. The first connection is preferably a connection for the distribution of audiovisual content during the enjoyment thereof (for example through a connection from a headend to a user terminal via a satellite, terrestrial or cable system etc.; or also a connection with a distribution device such as a server that delivers audiovisual streaming content), and the second connection is a connection for transferring data units that may be exploited once the transmission is completed (e.g. ftp and/or http etc.). Preferably, the first connection is a broadcast connection, and the second connection is a client-server connection.

Optionally, and as mentioned earlier, the video content is transmitted to the user device (210) by a content distribution device different from the server.

Optionally, the method also comprises a step of spatially and/or temporally aligning the at least one graphic element and the content, preferably on the basis of an indicator comprised in a frame (e.g. a flag, or the frame number, etc.). The alignment can be of the at least one graphic element relating to the primary content, for example in the sense that all of the graphic content making up the GUI at a certain instant is aligned with the primary video content.

Optionally, displaying the at least one graphic element described above comprises displaying the at least one graphic element also when second content differing from the video content is displayed. In other words, the graphic element is initially generated and displayed on the basis of first video content as displayed from the user device; if the displayed video changes (for example because the user has changed the audiovisual channel, including a streaming service, as is also evident from what has been illustrated herein), the user device will continue to display the previously generated graphic content even if the content changes, that is, even if the channel is changed. In other words, even if the content changes, the graphical interface of the application previously selected and/or activated will continue to be displayed.

Optionally, generating the at least one graphic element as described above comprises generating the graphic element (again on the server side) on the basis of at least one graphic element and (preferably also) at least one text element. A graphic element can represent a visual and graphic part of the user interface, which can be represented in vector and/or bitmap form; the rendering is performed on the server side. The text element represents a text to be displayed on the user device, preferably (but not necessarily) in combination with a graphic element. In any event, the text element is likewise rendered by the server, preferably together with the graphic element. The result, for example in the png format (but other formats such as jpg, etc. can be used) is transmitted to the user device so as to be displayed.

The above-described variants can be combined with one another, as will be evident to the person skilled in the art. Furthermore, the first embodiment relates to a method according to the present invention. All of the above considerations and variants apply, however, for devices, such as the user device or the server, as well as systems comprising the user device and the server, computer programs and signals and other examples and embodiments as also illustrated below. Therefore, and by way of example, a user device, a server, a system, a computer program, etc. can comprise means or units (receiving, transmitting, processing, coding, etc.) for carrying out one or more of the steps of the method disclosed above. Should several details be omitted for the sake of brevity, it is noted that all of the observations made above equally apply to what follows below.

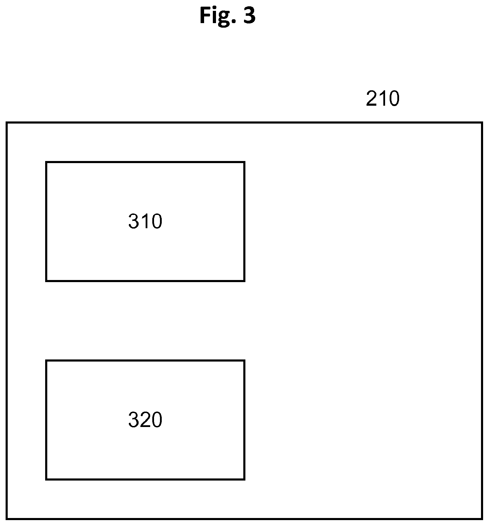

Another example will now be described with reference to figure 3 illustrating a user device (210) comprising a sending means (310) and a display means (320). Said user device is configured to display video content and run an application associated with the video content. As mentioned above, said application is designed to interact with a user of said user device (210) and cause a display of at least one graphic element overlaid on said video content. As mentioned above, the user device is included in a system (200) comprising the user device (210) and a server (220).

The sending means (310) is configured to send a request message relating to the application to the server (220). The display means (320) is configured to display at least one graphic element based on positioning information.

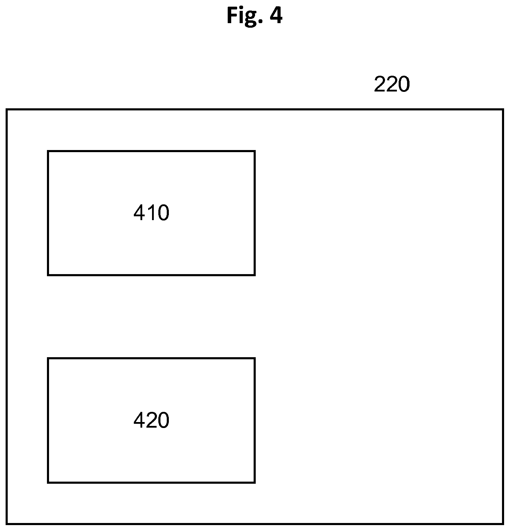

A further example will now be described with reference to figure 4 illustrating a server (220) comprising a generating means (410) and a sending means (420). The server can be built as one device or, alternatively, a set of devices interconnected to one another, and in particular it can be implemented in hardware, software or in a combination thereof, both in a concentrated and distributed form, as can the means included therein. The server is included in a system (200) comprising a user device (210) configured to display video content and run an application associated with the video content, wherein said application is designed to interact with a user of said user device (210) and cause a display of at least one graphic element overlaid on said video content, and the server (220).

The generating means (410) is configured to generate at least one graphic element and positioning information based on a request message relating to the application sent from the user device (210). The sending means (420) is configured to send a response message containing said at least one graphic element and the positioning information to the user device (210).

Figure 2 shows an exemplary system wherein the system comprises a user device (210) as described above and a server (220), likewise as described above. The user device (210) and the server (220) can be interconnected via any fixed and/or mobile network 410.

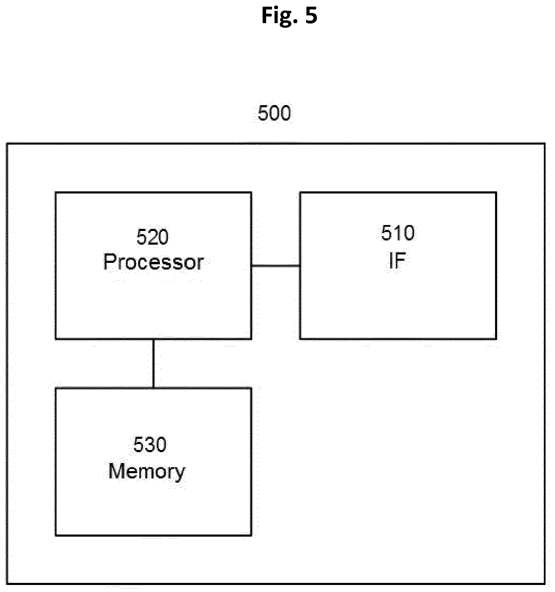

In another example, there is provided a computer program configured to perform, when said program is run on a computer, any or a combination of the steps of the method and the variants thereof as described above. Figure 5 illustrates a block diagram exemplifying a computer (500) capable of running the aforesaid program. In particular, the computer (500) comprises a memory (530) for storing the program instructions and/or the data necessary for its execution, a processor (520) for carrying out the instructions themselves and an input/output interface (510).

There is further provided a medium for supporting a computer program configured to perform, when the program is run on computer, one or a combination of the steps according to the method described above.

Examples of a medium are a static and/or dynamic memory, a fixed disk or any other medium such as a CD, DVD or Blue Ray. The medium also comprises a means capable of supporting a signal representing the instructions, including a means of cable transmission (ethernet, optical, etc.) or wireless transmission (cellular, satellite, digital terrestrial, etc.).

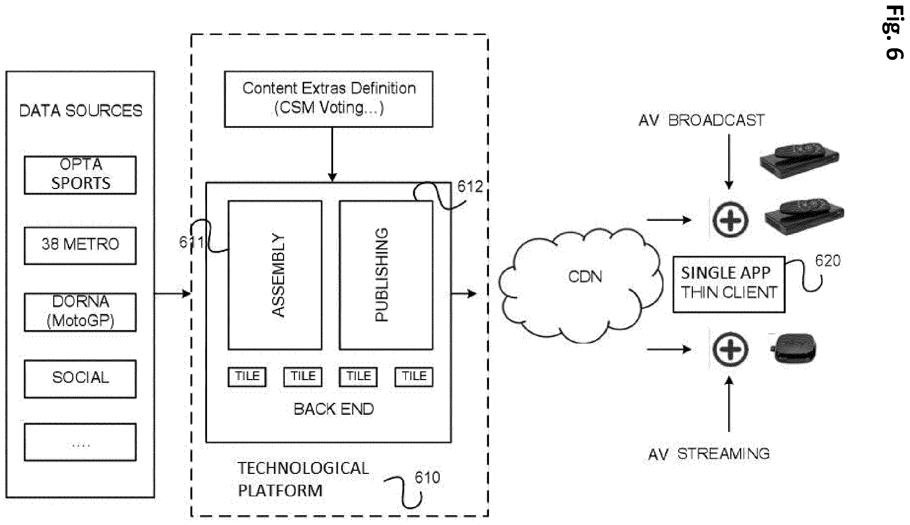

With reference to figure 6, it is noted that the solution described above is centred on an enabling platform composed of: a remote back-end component (610), or server, capable of assembling, aligning (spatially and/or temporally, for example according to the frame displayed) and publishing the augmented content (an example of the at least one graphic element, preferably part of the UI of an application run on the user device), both on demand and according to a set schedule; a front-end component (620), or user device, capable of making the augmented content available to the TV viewer and enabling the navigation thereof. In figure 6, the assembly (611) is an example of the generating means, whereas the publishing (612) is an example of the sending means. The assembly can generate, assemble or align one or more graphic elements and positioning information based, for example, on the channel displayed by the user and/or the level of navigation of the application.

This makes developing augmented content by intervening almost exclusively in the BE component (in which technologies generally permit great flexibility and ease of implementation) very flexible, rapid and economical, whilst the FE part (the component that will mainly take care of rendering the graphic part generated by the BE) will be developed only once. In the example in figure 6, the main video content displayed on the user device can be represented by audiovisual (AV) streaming and/or an audiovisual (AV) service transmitted, for example, on a satellite, terrestrial, cable, fibre optic, etc. broadcast channel. The at least one graphic element is provided, in the example, by a server and delivered to the user device via a CDN. The CDN in figure 6 can be the same CDN that delivers the AV streaming (but it need not necessarily be, as different CDNs can be used for the graphics and streaming), or the graphics can be delivered without using a CDN.

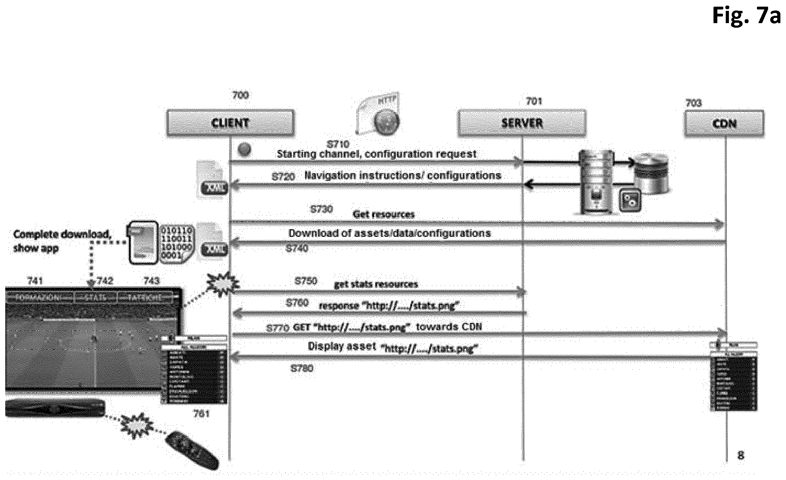

With reference to figure 7a, an example in which the system of figure 6 can operate will now be illustrated. Steps 710-780 can be implemented through http messages, although the invention is not limited to the presence of all these messages in this form/protocol. In step S710 a message indicating the starting channel (not necessary in the case of streaming, when the request for the graphic element is sent to the same server that provides streaming of the AV channel, or when the server is informed otherwise of said channel) and/or a configuration request is sent to a server. This message is an example of the request message of step S110. In response, see step S720, the server sends navigation instructions and/or configurations. In step S730, the client 700 requests from the CDN 703 the resources necessary for displaying, on the user device, the graphical interface corresponding to the navigation instructions and/or configuration information received in step S720. In response, in step S740, the user device 700 receives one or more graphic elements (in the example, optionally, together with other configuration information or data; for example, the positioning information is included in the message). In the example in figure 7a, graphic elements 741, 742, 743 are sent to indicate three areas selectable by the user (they can be three distinct graphic elements with respective positioning information; in another example, the three portions 741-743 can be represented by a single graphic element, in which the navigation information indicates how to distinguish which of the areas/portions 741, 742, 743 is selected by the user).

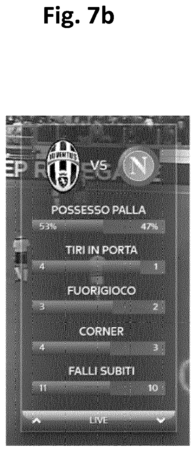

In step S750, for example where the user selects the area 742, the device 700 sends the server 701 a request to obtain statistics (function or state associated with the area 742; in other words, when the area 742 is selected, the server is capable of establishing what is requested by the user, for example on the basis of the navigation information and/or knowledge of the states of the GUI). In step S760, the server responds with a message indicating how and/or where to retrieve the statistics. In the example, an indication is given of the address from where a png graphic file containing the statistics can be downloaded. In step S770, the terminal 701 sends the CDN 703 a message requesting the png file indicated in the message of step S760. In response, the CDN 703 sends the terminal 700 the one or more requested graphic elements. Once received (independently of the primary video, as evident from what was also illustrated earlier) the one or more graphic elements are displayed overlaid on the main video. In the example, the statistics are illustrated at the side or in a corner (indicated with 761 on the screen), preferably in a less dynamic area of the screen. The graphic element (or set of graphic elements) 761 is displayed on the screen by the user device 700 as received. In figure 7a, this is exemplified by the blocks 761 present both on the server side and on the terminal side, indicating that the graphic element is prepared on the server side, sent to the terminal and displayed by the terminal as received. In the example, the graphic element is represented by statistics regarding a football match in the top Italian league, as illustrated in figure 7b. Steps S750-S780 can be repeated when the user selects another area of the screen, as illustrated above. Steps S730-S740 can be repeated when, for example, a certain trigger is set off (for example, a new programme associated with the channel begins, or when there is an indication in the primary video, or an indication sent to or from the terminal, etc.). Step S710 can be repeated when the channel is changed (but not necessarily, because it is advantageously possible to continue using the application also when the channel is changed), or upon an explicit request of the terminal (for example because the user wishes to change the application), or upon a response to a trigger sent to the terminal. In any event, it is possible to obtain a system in which a high-quality interactive GUI can be offered to terminals in a simple manner without increasing the transmission bandwidth on the connection of the main video and/or simplifying the structure of the terminals (also of varying nature) on which the content is enjoyed. In figure 7a, the following signs mean:
741: graphic element that can be selected (in a respective area) by the user to obtain the lineups of football teams;
742: graphic element that can be selected (in a respective area) by the user to obtain statistics on the ongoing event, a football match in the example;
743: graphic element that can be selected (in a respective area) by the user to obtain tactical information about the ongoing event.

Furthermore, the proposed solution makes it possible to abandon the model based on specific interactive applications of the various programs and different platforms, as it rationalises efforts through the development of a single application for each platform; to simplify the problems tied to software and middleware defects; to extend the lifecycle of STBs based on platform software that is not of the latest generation, by enabling new interactive capabilities that would otherwise require their replacement; to enable the definition of augmented content with publishers, simplifying and reducing the costs/times associated with the process of demanding interactive content, and optimising, also automatically, the use of the space on the screen.

The telemetry connected to the enjoyment of the augmented content enables detailed information to be obtained regarding TV viewer behaviour in respect of the enjoyment of programmes.

In the present description, reference has been made to means, such as, for example, a sending means, display means and generating means, to indicate any device that is concentrated (i.e. a distinct or self-contained unit) or distributed (i.e. implemented through a number of components connected to one another, whether physically near or remote); the means, be they concentrated or distributed, can further be implemented through hardware, software or a combination thereof. Furthermore, terms such as sending means, display means, generating means, etc. can also be replaced by transmitter, screen (display), processor (for carrying out the generation), etc. For example, the sending means (310) comprised in the user device and the sending means (420) comprised in the server can be a transmitter.

Many of the embodiments and examples have been explained with reference to steps of methods or processes. However, what has been described can also be implemented in a program to be run on a computing entity (also distributed) or an entity whose means are suitably configured. As illustrated above, the entity can be implemented in a single device, via HW/SW or a combination thereof, or in multiple interconnected units or devices (likewise HW, SW or a combination thereof).

## Claims

1. A method for managing graphic elements in a system (200) comprising a user device (210) and a server (220), the user device (210) being configured to display video content and run an application associated with the video content, wherein said application is designed to interact with a user of said user device (210) and cause a display of at least one graphic element overlaid on said video content, the graphic element being part of a graphical interface that characterises the application at a certain time instant, the method comprising the steps of:
- sending (S110) a request message relating to the application from the user device (210) to the server (220);
- generating (S120), in the server (220), at least said one graphic element and positioning information for said at least one graphic element based on the first request message, wherein
generating said at least one graphic element includes generating the graphic element on the basis of at least one graphic part and at least one text element,
generating includes rendering the graphic element on the server side, and
the positioning information indicates where to position the graphic element on a screen;
- sending (S130) a response message containing said at least one graphic element and the positioning information from the server (220) to the user device (210);
- displaying (S140), in the user device (210), said at least one graphic element based on the positioning information, wherein
the positioning information is generated on the basis of a portion of an area of images of the video content determined to be less dynamic, wherein an area is determined to be less dynamic when it includes a group of pixels included in a first frame and in a second frame that varies less compared to other groups of pixels included in the first frame and the second frame, where said first frame and said second frame follow one another or are sufficiently near, and wherein the positioning information indicates to place the graphic element on said area determined to be less dynamic.

2. The method of claim 1, wherein said at least one graphic element is part of a graphical interface which characterises the application at a certain instant of time, wherein preferably said application comprises a graphical interface which consists in said at least one graphic element.

3. The method of claim 1 or 2, wherein the step of generating comprises generating said at least one graphic element and the positioning information for said at least one graphic element based on at least one amongst information relating to a channel and information relating to a level of navigation of the application.

4. The method of any one of the preceding claims, wherein the step of generating comprises generating navigation information based on the request message;
the response message contains the navigation information; and
the method further comprising the step of managing, in the user device (210), said at least one graphic element based on the navigation information.

5. The method of any one of the preceding claims, wherein the positioning information comprises information on a position of said at least one graphic element; and
the position of said at least one graphic element depends on the video content.

6. The method according to claim 5, wherein the positioning information is generated on the basis of a portion of an area of images of the video content.

7. The method of any one of the preceding claims, wherein the positioning information comprises information on a degree of transparency relating to the display of said at least one graphic element.

8. The method according to any one of the preceding claims, wherein the video content is transmitted to the user device via a first connection, and the at least one graphic element is transmitted to the user device via a second connection independent of the first connection, wherein preferably the second connection is different from the first connection, and wherein further preferably the first connection is a connection for the distribution of audiovisual content during the enjoyment thereof, and the second connection is a connection for transferring data units that may be exploited once the transmission is completed.

9. The method according to any one of the preceding claims, wherein said video content is transmitted to said user device (210) by a content distribution device different from the server.

10. The method according to any one of the preceding claims, wherein the request message is triggered by a selection by the user of a new channel, of a new level of navigation of the application or of a graphic element, and/or by the user device based on the video content that is displayed.

11. A user device (210) configured to display video content and run an application associated with the video content, wherein said application is designed to interact with a user of said user device (210) and cause a display of at least one graphic element overlaid on said video content, in a system (200) comprising the user device (210) and a server (220), the graphic element being part of a graphical interface that characterises the application at a certain time instant, the user device (210) comprising:
- a sending means (310) configured to send a request message relating to the application to the server (220);
- means configured to receive, from the server, a response message containing at least one graphic element and positioning information, wherein the at least one graphic element has been rendered at the server on the basis of at least one graphic part and at least one text element, and the positioning information indicates where to position the graphic element on a screen;
- a display means (320) configured to display the at least one graphic element based on the positioning information, wherein
the positioning information is generated on the basis of a portion of an area of images of the video content determined to be less dynamic, wherein an area is determined to be less dynamic when it includes a group of pixels included in a first frame and in a second frame that varies less compared to other groups of pixels included in the first frame and the second frame, where said first frame and said second frame follow one another or are sufficiently near, and wherein the positioning information indicates to place the graphic element on said area determined to be less dynamic.

12. A server (220) in a system (200) comprising a user device (210) configured to display video content and run an application associated with the video content, wherein said application is designed to interact with a user of said user device (210) and cause a display of at least one graphic element overlaid on said video content, the graphic element being part of a graphical interface that characterises the application at a certain time instant, and the server (220), the server (220) comprising:
- a generating means (410) configured to generate at least one graphic element and positioning information based on a request message relating to the application sent from the user device (210), wherein generating said at least one graphic element includes generating the graphic element on the basis of at least one graphic part and at least one text element, generating includes rendering the graphic element on the server side, and the positioning information indicates where to position the graphic element on a screen;
- a sending means (420) configured to send a response message containing said at least one graphic element and the positioning information to the user device (210), wherein
the positioning information is generated on the basis of a portion of an area of images of the video content determined to be less dynamic, wherein an area is determined to be less dynamic when it includes a group of pixels included in a first frame and in a second frame that varies less compared to other groups of pixels included in the first frame and the second frame, where said first frame and said second frame follow one another or are sufficiently near, and wherein the positioning information indicates to place the graphic element on said area determined to be less dynamic.

13. A system (200) for managing graphic elements, the system comprising a user device (210) configured to display video content and run an application associated with the video content, wherein said application is designed to interact with a user of said user device (210) and cause a display of at least one graphic element overlaid on said video content according to claim 11 and a server (220) according to claim 12.

14. A computer program configured to perform, when said program is run on a computer, all the steps according to any one of the method claims 1 to 10.

15. A medium for supporting a computer program configured to perform when said program is run on a computer, all the steps according to any one of the method claims 1 to 10.

## Patentansprüche

1. Verfahren zur Verwaltung von grafischen Elementen in einem System (200) umfassend eine Nutzervorrichtung (210) und einen Server (220), wobei die Nutzervorrichtung (210) konfiguriert ist, um Videoinhalt anzuzeigen und eine Applikation auszuführen, die dem Videoinhalt zugeordnet ist, wobei die Applikation gestaltet ist, um mit einem Nutzer der Nutzervorrichtung (210) zu interagieren, und eine Anzeige mindestens eines grafischen Elements zu bewirken, das dem Videoinhalt überlagert ist, wobei das grafische Element Teil einer grafischen Schnittstelle ist, die die Applikation zu einem bestimmten Zeitpunkt kennzeichnet, wobei das Verfahren die folgenden Schritte umfasst:
- Senden (S110) einer Anfragenachricht in Bezug auf die Applikation von der Nutzervorrichtung (210) an den Server (220);
- Generieren (S120), in dem Server (220), des mindestens einen grafischen Elements und von Positionierungsinformationen für das mindestens eine grafische Element basierend auf der ersten Anfragenachricht, wobei
Generieren des mindestens einen grafischen Elements das Generieren des grafischen Elements auf der Basis von mindestens einem grafischen Teil und mindestens einem Textelement beinhaltet,
Generieren das Rendern des grafischen Elements auf der Serverseite beinhaltet, und
die Positionierungsinformationen angeben, wo das grafische Element am Bildschirm zu positionieren ist;
- Senden (S130) einer Antwortnachricht, die das mindestens eine grafische Element und die Positionierungsinformation enthält, von dem Server (220) an die Nutzervorrichtung (210);
- Anzeigen (S140), in der Nutzervorrichtung (210), des mindestens einen grafischen Elements basierend auf den Positionierungsinformationen, wobei
die Positionierungsinformationen basierend auf einem Abschnitt eines Bildbereichs des Videoinhalts generiert werden, von dem bestimmt wird, dass er weniger dynamisch ist, wobei bestimmt wird, dass der Bereich weniger dynamisch ist, wenn er eine Gruppe von Pixeln beinhaltet, die in einem ersten Einzelbild und in einem zweiten Einzelbild beinhaltet sind, die im Vergleich zu anderen Gruppen von Pixeln, die in dem ersten Einzelbild und dem zweiten Einzelbild beinhaltet sind, weniger variiert, wo das erste Einzelbild und das zweite Einzelbild aufeinanderfolgen oder ausreichend nahegelegen sind, und wobei die Positionierungsinformationen angeben, das grafische Element in dem als weniger dynamisch bestimmten Bereich zu platzieren.

2. Verfahren nach Anspruch 1, wobei das mindestens eine grafische Element Teil einer grafischen Schnittstelle ist, welche die Applikation zu einem bestimmten Zeitpunkt kennzeichnet, wobei die Applikation vorzugsweise eine grafische Schnittstelle umfasst, die aus dem mindestens einen grafischen Element besteht.

3. Verfahren nach Anspruch 1 oder 2, wobei der Schritt des Generierens das Generieren des mindestens einen grafischen Elements und der Positionierungsinformationen für das mindestens eine grafische Element basierend auf mindestens einer aus Informationen in Bezug auf einen Kanal und Informationen umfasst, die sich auf eine Navigationsstufe der Applikation beziehen.

4. Verfahren nach einem der vorstehenden Ansprüche, wobei der Schritt des Generierens das Generieren von Navigationsinformationen basierend auf der Anfragenachricht umfasst;
die Antwortnachricht die Navigationsinformationen enthält; und
das Verfahren weiter den Schritt des Verwaltens, in der Nutzervorrichtung (210), des mindestens einen grafischen Elements basierend auf den Navigationsinformationen umfasst.

5. Verfahren nach einem der vorstehenden Ansprüche, wobei die Positionierungsinformationen Informationen über eine Position des mindestens einen grafischen Elements umfassen; und
die Position des mindestens einen grafischen Elements von dem Videoinhalt abhängt.

6. Verfahren nach Anspruch 5, wobei die Positionierungsinformationen basierend auf einem Abschnitt eines Bildbereichs des Videoinhalts generiert werden.

7. Verfahren nach einem der vorstehenden Ansprüche, wobei die Positionierungsinformationen Informationen über einen Transparenzgrad in Bezug auf die Anzeige des mindestens einen grafischen Elements umfassen.

8. Verfahren nach einem der vorstehenden Ansprüche, wobei der Videoinhalt über eine erste Verbindung an die Nutzervorrichtung übertragen wird, und das mindestens eine grafische Element über eine zweite Verbindung unabhängig von der ersten Verbindung an die Nutzervorrichtung übertragen wird, wobei sich die zweite Verbindung vorzugsweise von der ersten Verbindung unterscheidet, und wobei die erste Verbindung weiter vorzugsweise eine Verbindung zur Verteilung von audiovisuellem Inhalt während des Genusses davon ist, und die zweite Verbindung eine Verbindung zum Übertragen von Dateneinheiten ist, die nach Abschluss der Übertragung verarbeitet werden können.

9. Verfahren nach einem der vorstehenden Ansprüche, wobei der Videoinhalt durch eine Inhaltsverteilungsvorrichtung, die sich von dem Server unterscheidet, an die Nutzervorrichtung (210) übertragen wird.

10. Verfahren nach einem der vorstehenden Ansprüche, wobei die Anfragenachricht durch eine nutzerseitige Auswahl eines neuen Kanals, einer neuen Navigationsstufe der Applikation oder eines grafischen Elements, und/oder durch die Nutzervorrichtung basierend auf dem Videoinhalt, der angezeigt wird, ausgelöst wird.

11. Nutzervorrichtung (210), die konfiguriert ist, um Videoinhalt anzuzeigen, und eine Applikation auszuführen, die dem Videoinhalt zugeordnet ist, wobei die Applikation gestaltet ist, um mit einem Nutzer der Nutzervorrichtung (210) zu interagieren, und eine Anzeige mindestens eines grafischen Elements zu bewirken, das dem Videoinhalt überlagert ist, in einem System (200) umfassend die Nutzervorrichtung (210) und einen Server (220), wobei das grafische Element Teil einer grafischen Schnittstelle ist, die die Applikation zu einem bestimmten Zeitpunkt kennzeichnet, wobei die Nutzervorrichtung (210) umfasst:
- ein Sendemittel (310), das konfiguriert ist, um eine Anfragenachricht in Bezug auf die Applikation an den Server (220) zu senden;
- Mittel, die konfiguriert sind, um von dem Server eine Antwortnachricht zu empfangen, die mindestens ein grafisches Element und Positionierungsinformationen enthält, wobei das mindestens eine grafische Element am Server auf der Basis von mindestens einem grafischen Teil und mindestens einem Textelement gerendert worden ist, und die Positionierungsinformationen angeben, wo das grafische Element auf einem Bildschirm zu positionieren ist;
- ein Anzeigemittel (320), das konfiguriert ist, um das mindestens eine grafische Element basierend auf den Positionierungsinformationen anzuzeigen, wobei die Positionierungsinformationen basierend auf einem Abschnitt eines Bildbereichs des Videoinhalts generiert werden, von dem bestimmt wird, dass er weniger dynamisch ist, wobei bestimmt wird, dass ein Bereich weniger dynamisch ist, wenn er eine Gruppe von Pixeln beinhaltet, die in einem ersten Einzelbild und in einem zweiten Einzelbild beinhaltet sind, die im Vergleich zu anderen Gruppen von Pixeln, die in dem ersten Einzelbild und dem zweiten Einzelbild beinhaltet sind, weniger variiert, wo das erste Einzelbild und das zweite Einzelbild aufeinanderfolgen oder ausreichend nahegelegen sind, und wobei die Positionierungsinformationen angeben, das grafische Element in dem als weniger dynamisch bestimmten Bereich zu platzieren.

12. Server (220) in einem System (200) umfassend eine Nutzervorrichtung (210), die konfiguriert ist, um Videoinhalt anzuzeigen und eine Applikation auszuführen, die dem Videoinhalt zugeordnet ist, wobei die Applikation gestaltet ist, um mit einem Nutzer der Nutzervorrichtung (210) zu interagieren, und eine Anzeige mindestens eines grafischen Elements zu bewirken, wobei das grafische Element Teil einer grafischen Schnittstelle ist, die die Applikation zu einem bestimmten Zeitpunkt kennzeichnet, und den Server (220), wobei der Server (220) umfasst:
- ein Generierungsmittel (410), das konfiguriert ist, um basierend auf einer Anfragenachricht in Bezug auf die Applikation, die von der Nutzervorrichtung (210) gesendet wird, mindestens ein grafisches Element und Positionierungsinformationen zu generieren, wobei Generieren des mindestens einen grafischen Elements das Generieren des grafischen Elements auf der Basis von mindestens einem grafischen Teil und mindestens einem Textelement beinhaltet, Generieren das Rendern des grafischen Elements auf der Serverseite beinhaltet, und die Positionierungsinformationen angeben, wo das grafische Element am Bildschirm zu positionieren ist;
- ein Sendemittel (420), das konfiguriert ist, um eine Antwortnachricht, die das mindestens eine grafische Element und die Positionierungsinformationen enthält, an die Nutzervorrichtung (210) zu senden, wobei die Positionierungsinformationen basierend auf einem Abschnitt eines Bildbereichs des Videoinhalts generiert werden, von dem bestimmt wird, dass er weniger dynamisch ist, wobei bestimmt wird, dass ein Bereich weniger dynamisch ist, wenn er eine Gruppe von Pixeln beinhaltet, die in einem ersten Einzelbild und in einem zweiten Einzelbild beinhaltet sind, die im Vergleich zu anderen Gruppen von Pixeln, die in dem ersten Einzelbild und dem zweiten Einzelbild beinhaltet sind, weniger variiert, wo das erste Einzelbild und das zweite Einzelbild aufeinanderfolgen oder ausreichend nahegelegen sind, und wobei die Positionierungsinformationen angeben, das grafische Element in dem als weniger dynamisch bestimmten Bereich zu platzieren.

13. System (200) zum Verwalten von grafischen Elementen, wobei das System eine Nutzervorrichtung (210) umfasst, die konfiguriert ist, um Videoinhalt anzuzeigen und eine Applikation auszuführen, die dem Videoinhalt zugeordnet ist, wobei die Applikation gestaltet ist, um mit einem Nutzer der Nutzervorrichtung (210) nach Anspruch 11 zu interagieren, und eine Anzeige mindestens eines grafischen Elements zu bewirken, das dem Videoinhalt überlagert ist, und einen Server (220) nach Anspruch 12.

14. Computerprogramm, das konfiguriert ist, um, wenn das Programm auf einem Computer ausgeführt wird, alle Schritte des Verfahrens nach einem der Ansprüche 1 bis 10 durchzuführen.

15. Medium zum Unterstützen eines Computerprogramms, das konfiguriert ist, um, wenn das Programm auf einem Computer ausgeführt wird, alle Schritte des Verfahrens nach einem der Ansprüche 1 bis 10 durchzuführen.

## Revendications

1. Procédé pour gérer des éléments graphiques dans un système (200) comprenant un dispositif utilisateur (210) et un serveur (220), le dispositif utilisateur (210) étant configuré pour afficher du contenu vidéo et exécuter une application associée au contenu vidéo, dans lequel ladite application est conçue pour interagir avec un utilisateur dudit dispositif utilisateur (210) et amener un affichage d'au moins un élément graphique recouvrant ledit contenu vidéo, l'élément graphique faisant partie d'une interface graphique qui caractérise l'application à un certain instant dans le temps, le procédé comprenant les étapes consistant à :
- envoyer (S110) un message de demande relatif à l'application depuis le dispositif utilisateur (210) au serveur (220) ;
- générer (S120), dans le serveur (220), au moins ledit un élément graphique et des informations de positionnement pour ledit au moins un élément graphique sur la base du premier message de demande, dans lequel
l'étape consistant à générer ledit au moins un élément graphique inclut l'étape consistant à générer l'élément graphique sur la base d'au moins une partie graphique et d'au moins un élément de texte,
l'étape consistant à générer inclut l'étape consistant à rendre l'élément graphique sur le côté serveur, et
les informations de positionnement indiquent où positionner l'élément graphique sur un écran ;
- envoyer (S130) un message de réponse contenant ledit au moins un élément graphique et les informations de positionnement depuis le serveur (220) au dispositif utilisateur (210) ;
- afficher (S140), dans le dispositif utilisateur (210), ledit au moins un élément graphique sur la base des informations de positionnement, dans lequel les informations de positionnement sont générées sur la base d'une portion d'une zone d'images du contenu vidéo déterminée comme étant moins dynamique, dans lequel une zone est déterminée comme étant moins dynamique lorsqu'elle inclut un groupe de pixels inclus dans une première trame et dans une seconde trame qui varie moins comparé à d'autres groupes de pixels inclus dans la première trame et la seconde trame, où ladite première trame et ladite seconde trame se suivent l'une l'autre ou sont suffisamment proches, et dans lequel les informations de positionnement indiquent de placer l'élément graphique sur ladite zone déterminée comme étant moins dynamique.

2. Procédé selon la revendication 1, dans lequel ledit au moins un élément graphique fait partie d'une interface graphique qui caractérise l'application à un certain instant dans le temps, dans lequel de préférence ladite application comprend une interface graphique qui consiste en ledit au moins un élément graphique.

3. Procédé selon la revendication 1 ou 2, dans lequel l'étape de génération comprend l'étape consistant à générer ledit au moins un élément graphique et les informations de positionnement pour ledit au moins un élément graphique sur la base d'au moins certaines parmi des informations relatives à un canal et des informations relatives à un niveau de navigation de l'application.

4. Procédé selon l'une quelconque des revendications précédentes, dans lequel l'étape de génération comprend l'étape consistant à générer des informations de navigation sur la base du message de demande ;
le message de réponse contient les informations de navigation ; et
le procédé comprenant en outre l'étape de gestion, dans le dispositif utilisateur (210), dudit au moins un élément graphique sur la base des informations de navigation.

5. Procédé selon l'une quelconque des revendications précédentes, dans lequel les informations de positionnement comprennent des informations sur une position dudit au moins un élément graphique ; et
la position dudit au moins un élément graphique dépend du contenu vidéo.

6. Procédé selon la revendication 5, dans lequel les informations de positionnement sont générées sur la base d'une portion d'une zone d'images du contenu vidéo.

7. Procédé selon l'une quelconque des revendications précédentes, dans lequel les informations de positionnement comprennent des informations sur un degré de transparence relatif à l'affichage dudit au moins un élément graphique.

8. Procédé selon l'une quelconque des revendications précédentes, dans lequel le contenu vidéo est transmis au dispositif utilisateur par l'intermédiaire d'une première connexion, et le au moins un élément graphique est transmis au dispositif utilisateur par l'intermédiaire d'une seconde connexion indépendante de la première connexion, dans lequel de préférence la seconde connexion est différente de la première connexion, et dans lequel en outre de préférence la première connexion est une connexion pour la distribution de contenu audiovisuel durant l'appréciation de celui-ci, et la seconde connexion est une connexion pour transférer des unités de données qui peuvent être exploitées une fois que la transmission est terminée.

9. Procédé selon l'une quelconque des revendications précédentes, dans lequel ledit contenu vidéo est transmis audit dispositif utilisateur (210) par un dispositif de distribution de contenu différent du serveur.

10. Procédé selon l'une quelconque des revendications précédentes, dans lequel le message de demande est déclenché par une sélection par l'utilisateur d'un nouveau canal, d'un nouveau niveau de navigation de l'application ou d'un élément graphique, et/ou par le dispositif utilisateur sur la base du contenu vidéo qui est affiché.

11. Dispositif utilisateur (210) configuré pour afficher du contenu vidéo et exécuter une application associée au contenu vidéo, dans lequel ladite application est conçue pour interagir avec un utilisateur dudit dispositif utilisateur (210) et amener un affichage d'au moins un élément graphique recouvrant ledit contenu vidéo, dans un système (200) comprenant le dispositif utilisateur (210) et un serveur (220), l'élément graphique faisant partie d'une interface graphique qui caractérise l'application à un certain instant dans le temps, le dispositif utilisateur (210) comprenant :
- un moyen d'envoi (310) configuré pour envoyer un message de demande relatif à l'application au serveur (220) ;
- un moyen configuré pour recevoir, depuis le serveur, un message de réponse contenant au moins un élément graphique et des informations de positionnement, dans lequel le au moins un élément graphique a été rendu au niveau du serveur sur la base d'au moins une partie graphique et d'au moins un élément de texte, et les informations de positionnement indiquent où positionner l'élément graphique sur un écran ;
- un moyen d'affichage (320) configuré pour afficher le au moins un élément graphique sur la base des informations de positionnement, dans lequel les informations de positionnement sont générées sur la base d'une portion d'une zone d'images du contenu vidéo déterminée comme étant moins dynamique, dans lequel une zone est déterminée comme étant moins dynamique lorsqu'elle inclut un groupe de pixels inclus dans une première trame et dans une seconde trame qui varie moins comparé à d'autres groupes de pixels inclus dans la première trame et la seconde trame, où ladite première trame et ladite seconde trame se suivent l'une l'autre ou sont suffisamment proches, et dans lequel les informations de positionnement indiquent de placer l'élément graphique sur ladite zone déterminée comme étant moins dynamique.

12. Serveur (220) dans un système (200) comprenant un dispositif utilisateur (210) configuré pour afficher du contenu vidéo et exécuter une application associée au contenu vidéo, dans lequel ladite application est conçue pour interagir avec un utilisateur dudit dispositif utilisateur (210) et amener un affichage d'au moins un élément graphique recouvrant ledit contenu vidéo, l'élément graphique faisant partie d'une interface graphique qui caractérise l'application à un certain instant dans le temps, et le serveur (220), le serveur (220) comprenant :
- un moyen de génération (410) configuré pour générer au moins un élément graphique et des informations de positionnement sur la base d'un message de demande relatif à l'application envoyé depuis le dispositif utilisateur (210), dans lequel l'étape de génération dudit au moins un élément graphique inclut l'étape consistant à générer l'élément graphique sur la base d'au moins une partie graphique et d'au moins un élément de texte, l'étape de génération inclut l'étape consistant à rendre l'élément graphique sur le côté serveur, et les informations de positionnement indiquent où positionner l'élément graphique sur un écran ;
- un moyen d'envoi (420) configuré pour envoyer un message de réponse contenant ledit au moins un élément graphique et les informations de positionnement au dispositif utilisateur (210), dans lequel les informations de positionnement sont générées sur la base d'une portion d'une zone d'images du contenu vidéo déterminée comme étant moins dynamique, dans lequel une zone est déterminée comme étant moins dynamique lorsqu'elle inclut un groupe de pixels inclus dans une première trame et dans une seconde trame qui varie moins comparé à d'autres groupes de pixels inclus dans la première trame et la seconde trame, où ladite première trame et ladite seconde trame se suivent l'une l'autre ou sont suffisamment proches, et dans lequel les informations de positionnement indiquent de placer l'élément graphique sur ladite zone déterminée comme étant moins dynamique.

13. Système (200) pour gérer des éléments graphiques, le système comprenant un dispositif utilisateur (210) configuré pour afficher du contenu vidéo et exécuter une application associée au contenu vidéo, dans lequel ladite application est conçue pour interagir avec un utilisateur dudit dispositif utilisateur (210) et amener un affichage d'au moins un élément graphique recouvrant ledit contenu vidéo selon la revendication 11 et un serveur (220) selon la revendication 12.

14. Programme informatique configuré pour effectuer, lorsque ledit programme est exécuté sur un ordinateur, toutes les étapes selon l'une quelconque des revendications de procédé 1 à 10.

15. Support pour supporter un programme informatique configuré pour effectuer, lorsque ledit programme est exécuté sur un ordinateur, toutes les étapes selon l'une quelconque des revendications de procédé 1 à 10.
